# EUROPÄISCHE PATENTSCHRIFT

(11) **EP 2 071 800 B1**
(45) Veröffentlichungstag und Bekanntmachung des Hinweises auf die Patenterteilung: **07.08.2019**
(21) Anmeldenummer: 08171288.7
(22) Anmeldetag: 11.12.2008
(51) Int. Cl.: H04L 29/08, H04L 29/12, H04L 12/24

(54) **Verfahren zum Herstellen lokaler Verbindungen zwischen elektronischen Endgeräten**
Method for creating local connections between electronic end devices
Procédé de fabrication de liaisons locales entre des terminaux électroniques

(30) Priorität: 14.12.2007 DE 102007060095
(43) Veröffentlichungstag der Anmeldung: 17.06.2009
(73) Patentinhaber: Vodafone GmbH, 40549 Düsseldorf (DE)
(72) Erfinder: Reiss, Christoph, 61440, Oberursel (DE); Düsener, Mark, 80337, München (DE); Hertle, Jochen, 85521, Ottobrunn (DE); Dr. Gutschleg, Dirk, 81827, München (DE)
(74) Vertreter: Müller & Schubert

(56) Entgegenhaltungen:
- EP-A- 1 578 093
- WO-A-98/03923
- WO-A1-2004/004184
- US-A1- 2005 010 417
- US-A1- 2005 044 179
- US-A1- 2005 082 370
- MCCUNE J M ET AL: "Seeing-Is-Believing: Using Camera Phones for Human-Verifiable Authentication" SECURITY AND PRIVACY, 2005 IEEE SYMPOSIUM ON OAKLAND, CA, USA 08-11 MAY 2005, PISCATAWAY, NJ, USA,IEEE, 8. Mai 2005 (2005-05-08), Seiten 110-124, XP010798367 ISBN: 978-0-7695-2339-2
- SCOTT D ET AL: "USING VISUAL TAGS TO BYPASS BLUETOOTH DEVICE DISCOVERY" MOBILE COMPUTING AND COMMUNICATIONS REVIEW, ACM, NEW YORK, NY, US, Bd. 9, Nr. 1, 1. Januar 2005 (2005-01-01), Seiten 41-53, XP001504817 ISSN: 1091-1669
- TASOS FALAS ET AL: "Two-Dimensional Bar-Code Decoding with Camera-Equipped Mobile Phones", 2007 IEEE INTERNATIONAL CONFERENCE ON PERVASIVE COMPUTING AND COMMUNICATIONS WORKSHOPS, IEEE, LOS ALAMITOS, CA, USA, 1 March 2007 (2007-03-01), pages 597-600, XP031070527, ISBN: 978-0-7695-2788-8

## Beschreibung

Die vorliegende Erfindung betrifft ein Verfahren zum Herstellen einer lokalen Verbindung zwischen elektronischen Endgeräten.

Heutzutage ist es möglich, unterschiedliche elektronische Endgeräte lokal miteinander zu verbinden. Unter einer lokalen Verbindung soll dabei solch eine Verbindung verstanden werden, bei der sich die einzelnen Engeräte in einer räumlichen Nähe zueinander befinden. Die elektronischen Endgeräte können dabei beispielsweise zu Kommunikationszwecken, zum Zwecke des Datenaustauschs oder dergleichen miteinander verbunden werden. Insbesondere durch die rasante Entwicklung elektronischer Endgeräte auf dem Kommunikationsgebiet oder dem Gebiet des Datenaustauschs ist es heutzutage möglich, aber auch erforderlich, dass unterschiedliche elektronische Endgeräte miteinander kommunizieren können. Zu denken ist beispielsweise an eine Situation, in der ein portabler Computer zum Zwecke einer Präsentation mit einem Projektor, beispielsweise einem so genannten Beamer, verbunden werden soll. Damit eine Verbindung zwischen verschiedenen elektronischen Endgeräten überhaupt zustande kommen kann, insbesondere dann, wenn die Verbindung drahtlos erfolgen soll, müssen die elektronischen Endgeräte in entsprechender Weise konfiguriert sein beziehungsweise werden.

Ein anderes Szenario ist beispielsweise denkbar, wenn für ein bereits vorhandenes erstes elektronisches Endgerät, beispielsweise ein Mobiltelefon oder dergleichen, ein zweites elektronisches Endgerät, beispielsweise in Form eines neuen Zubehörgeräts beschafft wird, etwa in Form eines Kopfhörers, eines Scanners, eines Sensors, eines Druckers oder dergleichen, und die Verbindung zwischen dem ersten elektronischen Endgerät und dem Zubehörgerät insbesondere drahtlos erfolgen soll. Um das Zubehörgerät in Verbindung mit dem ersten elektronischen Endgerät treten lassen zu können, müssen Konfigurationen geändert und/oder zusätzliche Funkverbindungen geschaffen werden.

Heutzutage werden derartige Einstellungen üblicherweise über Menüfunktionen und Hilfsfunktionen, häufig auch durch "Try and Error"-Methoden geändert. Viele Anwendungen werden so gar nicht adäquat genutzt. Die für die Etablierung einer lokalen Verbindung erforderlichen Handlungen sind in der Regel sehr komplex und für den Nutzer schwer eingängig, so dass von derartigen Nutzungsmöglichkeiten oftmals nur in vermindertem Maße Gebrauch gemacht wird. Oder aber, es muss technische Hilfe in Anspruch genommen werden, was nicht selten mit der Beanspruchung einer kostenpflichtigen Hotline oder eines kostenpflichtigen Supports einhergeht. Durch die komplexen Ausgestaltungen moderner elektronischer Endgeräte sowie der Vielfältigkeit von deren Nutzungs- und Anwendungsmöglichkeiten ist es heutzutage in der Regel so, dass nur technisch versierte Nutzer in der Lage sind, derartige elektronische Endgeräte in Bezug auf Systemeinstellungen oder zu startende Anwendungen zu bedienen.

Wie eingangs bereits erwähnt wurde, zeichnen sich moderne elektronische Endgeräte dadurch aus, dass sie über ein breites Spektrum an Anwendungsmöglichkeiten verfügen. Zu denken ist beispielsweise an moderne Mobiltelefone, die über ein breites Spektrum an Möglichkeiten und Optionen verfügen. Zu nennen ist hier beispielsweise die Implementierung einer digitalen Kamera zum Erzeugen von Bilddaten, die in fast keinem modernen Mobiltelefon mehr fehlt.

Die Ausstattung von Mobiltelefonen mit digitalen Fotokameras führt zu ganz neuen Anwendungsmöglichkeiten. So ist beispielsweise in der DE 102 45 900 A1 ein bildbasiertes Anfragesystem für Suchmaschinen beschrieben. Mittels eines elektronischen Endgeräts mit Kamerafunktion wird ein Bild aufgenommen. Das Bild wird zu einer zentralen Rechnereinheit übertragen. Dort wird das Bild mittels eines Bilderkennungsverfahrens analysiert und in symbolische Informationen umgesetzt. Aufgrund dieser Symbole können dann geeignete Informationen bereitgestellt werden.

In der WO 2004/004184 A1 ist eine Lösung beschrieben, wie ein erstes elektronisches Endgerät in Form eines "Handheld Computers" mit einem zweiten elektronischen Endgerät in Form eines "Business Machine" in Verbindung gebracht werden kann, wobei sich die elektronischen Endgeräte in räumlicher Nähe zueinander befinden. Das zweite elektronische Endgerät weist Informationsdaten auf, mittels derer es charakterisiert werden kann. Mit Hilfe einer zentralen Rechnereinheit wird unter Verwendung dieser Informationsdaten eine Verbindung zwischen den beiden elektronischen Endgeräten realisiert.

Der vorliegenden Erfindung liegt die Aufgabe zugrunde, ein Verfahren zum Herstellen einer lokalen Verbindung zwischen elektronischen Endgeräten anzugeben, bei dem die eingangs genannten Nachteile vermieden werden können. Insbesondere soll ein solches Verfahren in für den Benutzer einfacher und bedienfreundlicher Weise lokale Verbindungen zwischen elektronischen Endgeräten realisieren können.

Diese Aufgabe wird erfindungsgemäß gelöst durch das Verfahren mit den Merkmalen gemäß dem unabhängigen Patentanspruch 1. Weitere Merkmale und Details der Erfindung ergeben sich aus den Unteransprüchen, der Beschreibung sowie den Zeichnungen.

Die vorliegende Erfindung basiert auf dem Grundgedanken, dass eine externe Rechnereinheit bestimmte Informationsdaten erhält, diese analysiert und aufgrund der Analyseergebnisse eine lokale Verbindung zwischen zwei elektronischen Endgeräten herstellt. Dieses Verfahren, das im weiteren Verlauf anhand verschiedener Ausgestaltungsvarianten beschrieben wird, gibt dem Nutzer eines elektronischen Endgeräts eine komfortable Möglichkeit an die Hand, sein elektronisches Endgerät mit einem anderen elektronischen Endgerät zu verbinden. Dabei ist es nicht mehr, wie bislang üblich, erforderlich, dass der Nutzer die notwendigen Einstellungen und Konfigurationen selbst vornimmt. Vielmehr wird dies von der externen Rechnereinheit übernommen.

Gemäß einem ersten Aspekt, der jedoch nicht Gegenstand der Patentansprüche ist, wird ein Verfahren zum Herstellen einer lokalen Verbindung zwischen elektronischen Endgeräten bereitgestellt.

Durch das Verfahren wird es auf einfache und bedienfreundliche Weise möglich, die beiden elektronischen Endgeräte über eine lokale Verbindung miteinander zu verbinden. Die vorliegende Erfindung ist nicht auf bestimmte Typen elektronischer Endgeräte beschränkt. Vorteilhaft handelt es sich hierbei um Endgeräte, die zu Kommunikationszwecken und/oder zum Zwecke des Datenaustauschs dienen. Bei derartigen Endgeräten kann es sich beispielsweise um Mobiltelefone, Computer, Projektoren und dergleichen handeln.

Bei einer lokalen Verbindung handelt es sich vorteilhaft um eine zur so genannten "Remote-Verbindung" gegensätzliche Verbindung, eine Verbindung also, bei der sich die zu verbindenden Endgeräte in räumlicher Nähe zueinander befinden. Vorzugsweise handelt es sich bei einer lokalen Verbindung um eine Nahfeld-Verbindung. Vorteilhaft handelt es sich bei der herzustellenden lokalen Verbindung um eine drahtlose Verbindung.

In einem ersten Verfahrensschritt ist zunächst vorgesehen, dass über ein erstes elektronisches Endgerät, welches mit einer Kamera ausgestattet ist, Informationsdaten bezüglich wenigstens eines zweiten elektronisches Endgeräts, zu dem eine Verbindung vom ersten elektronischen Endgerät hergestellt werden soll, erzeugt oder erfasst und an eine externe Rechnereinheit übertragen werden, wobei die Informationsdaten in Form von Bilddaten von der Kamera erfasst werden..

Bei dem ersten elektronischen Endgerät kann es sich beispielsweise um ein Mobiltelefon oder dergleichen handeln. Bei dem zweiten elektronischen Endgerät kann es sich beispielsweise um ein hierzu passendes Zubehörgerät handeln, etwa ein Peripheriegerät, wie ein drahtloses Headset, einen Drucker, einen Scanner, einen Sensor, einen Projektor, oder dergleichen. Natürlich ist die Erfindung nicht auf die genannten Beispiele beschränkt.

Über das erste elektronische Endgerät werden Informationsdaten bezüglich des zweiten elektronischen Endgeräts erzeugt oder erfasst. Bei derartigen Informationsdaten handelt es sich um solche Daten, die in der Lage sind, das zweite elektronische Endgerät zu charakterisieren. Auch diesbezüglich ist die Erfindung nicht auf bestimmte Beispiele beschränkt. Beispielsweise kann es sich bei derartigen Informationsdaten um eine am Endgerät befindliche Nummer, einen Barcode, einen festgelegten Namen, eine Produktbezeichnung, ein Abbild des Endgeräts an sich oder eine andere Art der Kennzeichnung handeln.

Je nach Ausgestaltung der Informationsdaten und/oder des ersten elektronischen Endgeräts können die Informationsdaten von diesem erfasst, oder aber in diesem erzeugt werden. Wie dies im Einzelnen realisiert werden kann, wird anhand einiger vorteilhafter, jedoch nicht ausschließlicher Beispiele weiter unten näher erläutert.

Die vom ersten elektronischen Endgerät erfassten beziehungsweise erzeugten Informationsdaten werden anschließend auf eine beziehungsweise zu einer externen Rechnereinheit übertragen. Hierbei kann es sich beispielsweise um eine Art Server handeln. Die Übertragung kann dabei je nach Ausgestaltung des ersten elektronischen Endgeräts sowie des Kommunikationsnetzes, in dem sich dieses befindet, unterschiedlich ausgebildet sein. Wenn es sich bei dem ersten elektronischen Endgerät um ein Mobiltelefon handelt, ist das Kommunikationsnetz vorzugsweise als Mobilfunknetz ausgebildet. Die externe Rechnereinheit kann dann beispielsweise im Mobilfunknetz vorhanden sein und vom Netzbetreiber betrieben werden. In einem solchen Fall kann die Übertragung der Informationsdaten beispielsweise an eine konkrete Telefonnummer oder einen Datenport gesendet werden, der/die der Rechnereinheit zugeordnet ist.

In einem nächsten Schritt werden die von der Rechnereinheit empfangenen Informationsdaten in dieser analysiert. Dazu ist der Rechnereinheit eine Analyseeinrichtung zugeordnet. Vorteilhaft ist die Analyseeinrichtung Bestandteil der Rechnereinheit. Natürlich kann die Analyseeinrichtung auch separat ausgebildet sein, wobei die Rechnereinheit in einem solchen Fall dann zumindest zeitweilig mit der Analyseeinrichtung kommuniziert. Die Analyse der Informationsdaten erfolgt dabei vorzugsweise automatisch. In der Analyseeinrichtung werden die Informationsdaten mittels eines Bildanalyseverfahrens auf Inhalte, die das wenigstens eine zweite elektronische Endgerät charakterisieren, analysiert. In der Rechnereinheit wird somit ermittelt, um was für ein Gerät es sich bei dem zweiten elektronischen Endgerät handelt. Je nach Art der Informationsdaten kann die Analyse mittels unterschiedlicher Analyseverfahren und Analyseeinrichtungen durchgeführt werden. Einige vorteilhafte, jedoch nicht ausschließliche Beispiele werden im weiteren Verlauf der Beschreibung näher erläutert.

Es ist vorgesehen, dass das erste elektronische Endgerät bei der Übertragung der Informationsdaten bezüglich des zweiten elektronischen Endgeräts auch Informationsdaten über sich selbst und die eigene Beschaffenheit mit überträgt. Bei der Analyse werden zusätzlich auch die Informationsdaten bezüglich des ersten elektronischen Endgeräts mitberücksichtigt werden. Dies ist insbesondere dann von Vorteil, wenn es sich bei dem ersten elektronischen Endgerät nicht um ein Standardgerät handelt und deshalb besondere Konfigurationen und Einstellungen erforderlich sind.

Auf der Basis der analysierten Inhalte werden in einer der Rechnereinheit zugeordneten Datenbank Daten zur Verbindungsherstellung des ersten elektronischen Endgeräts mit dem wenigstens einen zweiten elektronischen Endgerät ermittelt. Hierzu greift die Rechnereinheit zumindest zeitweilig auf eine Datenbank zu. Vorteilhaft kann die Datenbank Bestandteil der Rechnereinheit sein. Natürlich ist auch denkbar, dass die Datenbank separat zur Rechnereinheit ausgebildet ist und dass die Rechnereinheit je nach Bedarf mit der Datenbank kommuniziert und auf diese zugreift.

In der Datenbank sind zu unterschiedlichen zweiten elektronischen Endgeräten Informationsdaten abgelegt, die mit entsprechenden Daten zur Verbindungsherstellung mit anderen elektronischen Endgeräten verknüpft sind. Nach der erfolgten Analyse der Informationsdaten vergleicht die Rechnereinheit die analysierten Inhalte mit solchen Informationsdaten, die in der Datenbank abgelegt sind. Bei der Analyse können zusätzlich auch die Informationsdaten bezüglich des ersten elektronischen Endgeräts mitberücksichtigt werden. Sofern eine Übereinstimmung zwischen den analysierten Informationsdaten und den in der Datenbank befindlichen Informationsdaten erkannt wird, werden die dazugehörigen und auf diese Weise ermittelten Daten zur Verbindungsherstellung von der Rechnereinheit zur Herstellung der lokalen Verbindung verwendet.

Auf der Basis der ermittelten Daten zur Verbindungsherstellung wird schließlich eine Verbindung zwischen dem ersten elektronischen Endgerät und dem wenigstens einen zweiten elektronischen Endgerät hergestellt. Dies kann auf unterschiedliche Weise direkt oder indirekt erfolgen, wie nachfolgend anhand einiger bevorzugter Ausführungsbeispiele beschrieben wird.

Vorteilhaft kann vorgesehen sein, dass die Verbindung zwischen dem ersten elektronischen Endgerät und dem zweiten elektronischen Endgerät über die externe Rechnereinheit erfolgt. In diesem Fall dient die Rechnereinheit zu einer indirekten Verbindung zwischen den beiden elektronischen Endgeräten. Eine solche Verbindung ist beispielsweise dann vorteilhaft, wenn das erste und zweite elektronische Endgerät nicht über eine entsprechende Schnittstelle zur direkten Verbindung miteinander verfügen. In diesem Fall existieren keine lokalen Schnittstellen, so dass die Verbindung über die Rechnereinheit zustande kommt, diese folglich als eine Art Schnittstelle zwischen den beiden elektronischen Endgeräten fungiert. In diesem Fall werden die Daten nach erfolgter Verbindung über die Rechnereinheit geschleust.

In anderer Ausgestaltung ist vorteilhaft vorgesehen, dass die ermittelten Daten zur Verbindungsherstellung zum Zwecke der Verbindungsherstellung von der externen Rechnereinheit auf das erste elektronische Endgerät und/oder auf das wenigstens eine zweite elektronische Endgerät übertragen werden.

In diesem Fall existieren verschiedene Varianten, wie eine solche Verbindung hergestellt werden kann. Nachfolgend werden hierzu einige vorteilhafte, jedoch nicht ausschließliche Beispiele beschrieben, wobei die in den Beispielen geschilderten Abläufe sowohl alternativ als auch kumulativ stattfinden können.

Beispielsweise kann vorgesehen sein, dass mittels der übertragenen Daten zur Verbindungsherstellung eine entsprechende Verbindung aktiv hergestellt werden kann und dass in einem solchen Fall mittels der übertragenen Daten zur Verbindungsherstellung eine direkte Verbindung zwischen dem ersten elektronischen Endgerät und dem wenigstens einen zweiten elektronischen Endgerät hergestellt wird. Hierbei handelt es sich dann um eine direkte Verbindung zwischen den beiden elektronischen Endgeräten. Die externe Rechnereinheit ermittelt in diesem Fall die für eine Verbindungsherstellung erforderlichen Daten und überträgt diese auf zumindest eines der beiden elektronischen Endgeräte, von dem dann die Verbindungsherstellung zum jeweils anderen elektronischen Endgerät initiiert wird. Beispielsweise könnte dies in einer Weise geschehen, dass die Rechnereinheit eine entsprechende Konfigurationsdatei, bei der es sich dann um die Daten zur Verbindungsherstellung handelt, an das erste und/oder zweite elektronische Endgerät schickt, über die dann die erforderliche(n) Schnittstelle(n) eingerichtet beziehungsweise aktiviert wird/werden, um eine Kommunikation zwischen den beiden Endgeräten zu ermöglichen.

Gemäß einer anderen Ausführungsform kann aber auch vorgesehen sein, dass mittels der übertragenen Daten zur Verbindungsherstellung eine solche Verbindung nicht aktiv hergestellt wird. In diesem Fall handelt es sich bei den übertragenen Daten zur Verbindungsherstellung vorteilhaft um Informationsdaten, die eine Verbindungsherstellung zwischen den elektronischen Endgeräten unterstützen. Auf der Basis dieser unterstützenden Information kann dann der Nutzer die erforderlichen Einstellungen vornehmen, damit eine Verbindungsherstellung zwischen den Endgeräten möglich wird. Gemäß dieser Ausführungsvariante ist folglich vorgesehen, dass die eine Verbindungsherstellung unterstützenden Informationen von der externen Rechnereinheit an das erste und/oder zweite elektronische Endgerät übertragen werden. Beispielsweise kann es sich bei dem ersten elektronischen Endgerät um ein Mobiltelefon handeln, wobei die unterstützenden Informationen in einem solchen Fall vorteilhaft auf das Mobiltelefon übertragen und dort auf dessen Anzeigeeinrichtung (Display) angezeigt werden. Dann kann der Nutzer auch selbst Einstellungen am anderen, beispielsweise am zweiten, elektronischen Endgerät nach diesen Informationen, bei denen es sich dann um eine Art Anleitung handelt, vornehmen, insbesondere auch manuell, wenn es rein automatisch nicht geht.

Bei dem bisher beschriebenen Verfahrensaspekt ist die Situation geschildert, bei der das erste elektronische Endgerät, mittels dessen die Informationsdaten bezüglich des zweiten elektronischen Endgeräts erfasst und übertragen werden, auch gleichzeitig mit dem zweiten elektronischen Endgerät verbunden werden soll. Die vorliegende Erfindung ist auf eine Anwendung gerichtet, bei der zwei vom ersten elektronischen Endgerät unabhängige elektronische Endgeräte mittels einer lokalen Verbindung verbunden werden sollen, wobei das erste elektronische Endgerät lediglich bei der Herstellung der Verbindung eine Rolle spielt, jedoch an der späteren Verbindung selbst nicht beteiligt ist.

Erfindungsgemäß wird deshalb ein Verfahren zum Herstellen einer lokalen Verbindung zwischen elektronischen Endgeräten bereitgestellt, das durch die im unabhängigen Patentanspruch 1 genannten Schritte gekennzeichnet ist.

Mit dem erfindungsgemäßen Verfahren wird es möglich unterschiedliche elektronische Endgeräte, die zur Verdeutlichung als zweite beziehungsweise dritte elektronische Endgeräte bezeichnet sind, über eine lokale Verbindung miteinander zu verbinden, wobei zur Herstellung der Verbindung ein weiteres elektronisches Endgerät, das als erstes elektronisches Endgerät bezeichnet ist, verwendet wird. Das erste elektronische Endgerät hat die Aufgabe, bei der Herstellung der Verbindung zu assistieren.

Der grundsätzliche Ablauf des erfindungsgemäßen Verfahrens entspricht dabei dem grundsätzlichen Ablauf des im Zusammenhang mit dem ersten Aspekt beschriebenen Verfahrens, so dass zur Vermeidung von Wiederholungen bezüglich der Funktionsweise und dem Ablauf des Verfahrens nach dem erfindungsgemäßen Aspekt zunächst auf die vorstehenden Ausführungen zum ersten Aspekt vollinhaltlich Bezug genommen und verwiesen wird, so dass alles zum ersten Aspekt Gesagte wechselweise auch für das erfindungsgemäßen Verfahren gilt.

Auch beim erfindungsgemäßen Verfahren kann die eigentliche Verbindungsherstellung direkt oder indirekt erfolgen. Beispielsweise kann die Verbindung zwischen dem wenigstens einen zweiten elektronischen Endgerät und dem wenigstens einen dritten elektronischen Endgerät über die externe Rechnereinheit erfolgen. Hierbei handelt es sich um eine wie weiter oben bereits beschriebene indirekte Verbindung. In anderer Ausgestaltung kann vorgesehen sein, dass die ermittelten Daten zur Verbindungsherstellung zum Zwecke der Verbindungsherstellung von der externen Rechnereinheit auf das erste elektronische Endgerät und/oder das wenigstens eine zweite elektronische Endgerät und/oder das wenigstens eine dritte elektronische Endgerät übertragen werden. Beispielsweise kann, wie weiter oben bereits beschrieben, mittels der übertragenen Daten zur Verbindungsherstellung eine direkte Verbindung zwischen dem wenigstens einen zweiten elektronischen Endgerät und dem wenigstens einen dritten elektronischen Endgerät hergestellt werden. Hierbei handelt es sich um eine wie weiter oben bereits beschriebene direkte Verbindung. In einem solchen Fall werden die Daten zur Verbindungsherstellung von der externen Rechnereinheit vorteilhaft direkt an das zweite und/der dritte elektronische Endgerät übertragen. Bei der direkten Verbindung könnte alternativ auch die Ausgestaltung realisiert werden, dass die Daten zur Verbindungsherstellung zunächst von der externen Rechnereinheit auf das erste elektronische Endgerät übertragen werden, und dass eine Verbindung dann vom ersten elektronischen Endgerät initiiert wird, oder dass die Daten anschließend vom ersten elektronischen Endgerät zum Zwecke der Verbindungsherstellung auf das zweite und/oder dritte elektronische Endgerät übertragen werden, wobei die eigentliche Verbindungsherstellung dann direkt zwischen dem zweiten und dritten elektronischen Endgerät erfolgt.

Natürlich ist alternativ oder zusätzlich auch denkbar, dass, wie weiter oben bereits beschrieben wurde, von der externen Rechnereinheit solche Daten zur Verbindungsherstellung übertragen werden, bei denen es sich um unterstützende Informationen für die Verbindungsherstellung handelt. Gemäß dieser Ausführungsvariante ist folglich vorgesehen, dass die eine Verbindungsherstellung unterstützenden Informationen von der externen Rechnereinheit an das erste und/oder zweite und/oder dritte elektronische Endgerät übertragen werden. Wenn in einem solchen Fall beispielsweise die externe Rechnereinheit keine Kommunikationsverbindung zum zweiten und dritten elektronischen Endgerät hat, so können die unterstützenden Informationen, bei denen es sich dann um eine Art Anleitung handeln kann, zum ersten elektronischen Endgerät übertragen werden, bei dem es sich beispielsweise, wie oben geschildert, um ein Mobiltelefon handeln kann. Anhand der übermittelten Informationen kann dann der Nutzer die erforderlichen Einstellungen am zweiten und/oder dritten elektronischen Endgerät vornehmen, um eine Verbindung zwischen den beiden herzustellen.

Das erste elektronische Endgerät gemäß den beiden zuvor beschriebenen Aspekten ist mit einer digitalen Kamera ausgestattet. Beispielsweise kann es sich bei dem Endgerät um ein Mobiltelefon mit implementierter Digitalkamera handeln. Die Informationsdaten werden in Form von Bilddaten von der Kamera erfasst. Die Bilddaten werden an die externe Rechnereinheit übertragen und mittels eines Bildanalyseverfahrens in der externen Rechnereinheit analysiert. Bildanalyseverfahren sind an sich bereits bekannt und dem Fachmann als solche geläufig, so dass hier auf die Funktionsweise derartiger Bildanalyseverfahren nicht weiter eingegangen werden muss. Mittels eines geeigneten Algorithmus zur Bilderkennung beispielsweise kann das in der Rechnereinheit empfangene Bild analysiert werden, wobei charakteristische Inhalte aus dem Bild extrahiert werden können. Dabei kann es sich beispielsweise um einzelne Bestandteile des Bildes handeln, selbstverständlich aber auch um das Bild als solches und in seiner Gesamtheit.

Beispielsweise kann vom ersten elektronischen Endgerät ein Bild oder eine Bildabfolge vom zweiten und/oder dritten elektronischen Endgerät aufgenommen werden, wobei hier insbesondere die das Endgerät charakterisierenden Informationsdaten aufgenommen werden. Bei dem zweiten/dritten elektronischen Endgerät kann es sich beispielsweise um ein Peripheriegerät, ein Zubehörgerät oder dergleichen handeln. Das Bild wird vom ersten elektronischen Endgerät mit eingebauter Kamera aufgenommen. Das Bild wird dann an die Rechnereinheit weitergeleitet. Beispielsweise kann das Bild als MMS (Multimedia Messaging Service) an eine konkrete Telefonnummer/Datenport gesendet werden, die der Rechnereinheit zugeordnet ist. In der Rechnereinheit, insbesondere in deren Analyseeinrichtung, wird vorteilhaft mit Hilfe eines geeigneten Algorithmus das Bild mit in einer Datenbank vorhandenen Bildern verglichen. Wenn das Thema des Bildes erkannt wird, können damit verknüpfte Daten zur Verbindungsherstellung, beispielsweise geeignete Konfigurationsdaten, Konfigurationsänderungen oder dergleichen an das elektronische Zielgerät gesendet werden. Alternativ oder zusätzlich ist auch möglich, dass entsprechende Unterprogramme gestartet werden.

Diese wären dann auch in der Lage, weitere Anwendungen auf einer anderen Rechnereinheit, beispielsweise einem weiteren Server, zu starten.

Ein zentraler Kern der vorliegenden Erfindung besteht darin, dass aufgrund von empfangenen Informationsdaten die externe Rechnereinheit eine Verbindung zwischen elektronischen Endgeräten herstellt, beziehungsweise die Verbindungsherstellung unterstützt, damit die elektronischen Endgeräte miteinander kommunizieren können. Die externe Rechnereinheit stellt somit ein wesentliches Bauteil für die Durchführbarkeit des erfindungsgemäßen Verfahrens dar. Im Folgenden wird die Erfindung zum Zwecke einer umfassenden Darstellung auch aus der Sichtweise der externen Rechnereinheit beschrieben.

In Bezug auf den ersten Aspekt wird aus Sicht der externen Rechnereinheit ein Verfahren zum Herstellen einer lokalen Verbindung zwischen elektronischen Endgeräten bereitgestellt. Das Verfahren ist durch folgende, von der Rechnereinheit durchgeführte Schritte gekennzeichnet: Empfangen von Informationsdaten bezüglich wenigstens eines zweiten elektronisches Endgeräts, zu dem eine Verbindung von einem ersten elektronischen Endgerät hergestellt werden soll, über ein erstes elektronisches Endgerät, indem diese erzeugt oder erfasst worden sind; Analysieren der Informationsdaten auf Inhalte, die das wenigstens eine zweite elektronische Endgerät charakterisieren, in einer der Rechnereinheit zugeordneten Analyseeinrichtung; Auf der Basis der analysierten Inhalte, Ermitteln von Daten zur Verbindungsherstellung zwischen dem ersten elektronischen Endgerät und dem wenigstens einen zweiten elektronischen Endgerät in einer der Rechnereinheit zugeordneten Datenbank; und auf der Basis der ermittelten Daten zur Verbindungsherstellung, Herstellung einer Verbindung zwischen dem ersten elektronischen Endgerät und dem wenigstens einen zweiten elektronischen Endgerät.

Zu den Merkmalen, Details und der Funktionsweise des Verfahrens wird zur Vermeidung von Wiederholungen auf die vorstehenden Ausführungen zu dem ersten Aspekt vollinhaltlich Bezug genommen und verwiesen, so dass alles bezüglich des ersten Aspekts Gesagte auch im Zusammenhang mit diesem Verfahrensaspekt gilt.

Vorteilhaft kann die Verbindung zwischen dem ersten elektronischen Endgerät und dem zweiten elektronischen Endgerät über die Rechnereinheit erfolgen, wie dies weiter oben schon näher erläutert worden ist. In anderer Ausgestaltung kann vorteilhaft vorgesehen sein, dass die ermittelten Daten zur Verbindungsherstellung von der externen Rechnereinheit auf das erste elektronische Endgerät und/oder das wenigstens eine zweite elektronische Endgerät übertragen werden. Die eigentliche Herstellung der Verbindung wird dann auf der Basis dieser Daten initiiert, wie dies weiter oben schon in größerem Detail beschrieben worden ist.

In Bezug auf den zweiten, erfindungsgemäßen Aspekt der Erfindung wird aus Sicht der externen Rechnereinheit ein Verfahren zum Herstellen einer lokalen Verbindung zwischen elektronischen Endgeräten bereitgestellt, wobei das Verfahren durch folgende, von der Rechnereinheit durchgeführte Schritte gekennzeichnet ist: Empfangen von Informationsdaten bezüglich wenigstens eines zweiten elektronisches Endgeräts und/oder wenigstens eines dritten elektronischen Endgeräts, zwischen denen eine Verbindung hergestellt werden soll, über ein erstes elektronisches Endgerät, indem diese erzeugt oder erfasst worden sind; Analysieren der Informationsdaten auf Inhalte, die das wenigstens eine zweite elektronische Endgerät und/oder das wenigstens eine dritte elektronische Endgerät charakterisieren, in einer der Rechnereinheit zugeordneten Analyseeinrichtung; Auf der Basis der analysierten Inhalte, Ermitteln von Daten zur Verbindungsherstellung zwischen dem wenigstens einen zweiten elektronischen Endgerät und dem wenigstens einen dritten elektronischen Endgerät in einer der Rechnereinheit zugeordneten Datenbank; und auf der Basis der ermittelten Daten zur Verbindungsherstellung, Herstellung einer Verbindung zwischen dem wenigstens einen zweiten elektronischen Endgerät und dem wenigstens einen dritten elektronischen Endgerät.

Zu den Merkmalen, Details und der Funktionsweise des Verfahrens wird zur Vermeidung von Wiederholungen auf die vorstehenden Ausführungen zu dem zweiten, erfindungsgemäßen Aspekt vollinhaltlich Bezug genommen und verwiesen, so dass alles bezüglich des zweiten, erfindungsgemäßen Aspekts Gesagte auch im Zusammenhang mit diesem Verfahrensaspekt gilt.

Vorteilhaft kann die Verbindung zwischen dem wenigstens einen zweiten elektronischen Endgerät und dem wenigstens einen dritten elektronischen Endgerät über die Rechnereinheit erfolgen, wie dies weiter oben schon näher erläutert worden ist. In anderer Ausgestaltung kann vorteilhaft vorgesehen sein, dass die ermittelten Daten zur Verbindungsherstellung von der externen Rechnereinheit auf das erste elektronische Endgerät und/oder das wenigstens eine zweite elektronische Endgerät und/oder das wenigstens eine dritte elektronische Endgerät übertragen werden. Die eigentliche Herstellung der Verbindung wird dann auf der Basis dieser Daten initiiert, wie dies weiter oben schon in größerem Detail beschrieben worden ist. Beispielsweise kann eine Verbindung dann vom zweiten und/oder dritten elektronischen Endgerät initiiert werden. Alternativ wäre auch denkbar, dass die Daten zunächst auf das erste elektronische Endgerät übertragen werden, welches dann die Verbindung initiiert oder die Daten auf wenigstens eines der anderen elektronischen Endgeräte überträgt. Natürlich ist auch hier neben einer direkten, aktiven Verbindung wiederum die Möglichkeit denkbar, dass, wie weiter oben bereits erläutert, die übertragenen Daten nicht zur direkten Verbindungsherstellung dienen, sondern dass die Daten in Form von unterstützenden Informationen übertragen werden, mittels derer dann eine Verbindung initiiert werden kann.

Analog zu den Ausführungen weiter oben ist vorgesehen, dass die vom ersten elektronischen Endgerät empfangenen Informationsdaten in Form von Bilddaten empfangen werden und dass die Bilddaten mittels eines Bildanalyseverfahrens in der externen Rechnereinheit analysiert werden.

Durch die Erfindung, wie sie anhand der beiden Verfahrensaspekte vorstehend beschrieben worden ist, wird es insbesondere möglich, in für den Nutzer einfacher und bedienfreundlicher Weise Anwendungen und Einstellungen per Bild zu steuern. In vorteilhafter Ausgestaltung wird es möglich, dass durch eine übertragene Fotografie Einstellungen und/oder Anwendungsprogramme auf dem ersten elektronischen Endgerät, beispielsweise einem sendenden Mobiltelefon, durch eine externe Rechnereinheit, beispielsweise einen Remote-Server, gestartet werden können. Auch können dann durch diese Anwendung wiederum weitere Anwendungen auf einer anderen Rechnereinheit, beispielsweise einem zusätzlichen Server, gestartet werden.

Durch das erfindungsgemäße Verfahren werden somit einfache ferngesteuerte Modifikationen der Einstellungen von elektronischen Endgeräten, beispielsweise von Mobilfunkgeräten, sowie das einfache Starten von Anwendungen und Schnittstellen (Interfaces) möglich.

Der allgemeine Ablauf des Verfahrens soll anhand zweier konkreter, allerdings nicht ausschließlicher Beispiele verdeutlicht werden.

Ausgangslage soll sein, dass für ein Mobiltelefon (erstes elektronisches Endgerät) ein neues Zubehörteil (zweites elektronisches Endgerät) beschafft wurde, beispielsweise ein Kopfhörer, ein Scanner, ein Sensor, ein Drucker oder dergleichen. Um das Zubehörgerät in Verbindung mit dem Mobiltelefon treten lassen zu können, müssen Konfigurationen geändert oder zusätzliche Funkverbindungen geschaffen werden. Durch die Fotografie des Zubehörgeräts werden die erforderlichen Treiber und Einstellungsänderungsvorgaben, die sich auf der externen Rechnereinheit, beispielsweise einem Server, befinden, an das Mobilfunkgerät gesendet. Zusätzlich kann ein Kommunikationsprotokoll gestartet werden, um eine lokale Verbindung, beispielsweise eine Nahfeld-Verbindung, zwischen dem Mobiltelefon und dem Zubehörgerät zu starten. Auf diese Weise wird die bisher teilweise komplizierte Menüführung durch die Versendung eines Bildes ersetzt.

Gerade die umfangreiche Anbindung von komplexer Peripherie, beispielsweise von Sensoren, wodurch Datendienste genutzt werden können, wird hierdurch gefördert.

Gemäß einem anderen Beispiel könnte vorgesehen sein, dass eine (prozessbezogene Standard-)Anwendung auf einem Server gestartet werden soll. Die erforderlichen Sequenzen mit einer Eingabeeinrichtung, etwa einer Tatstatur eines Mobiltelefons, einzugeben, dauert zu lange und ist zu aufwändig. Nunmehr wird ein Bild verarbeitet und einkonfiguriert, welches mit einer Startsequenz verknüpft ist. Beim Empfangen des Bildes wird der Prozess gestartet, beispielsweise in Form einer Alarmkette bei Feuer, Hochwasser, Unfall oder dergleichen. Dies kann bei Bedarf auch noch mit einer Standortangabe (per LBS - Location Based Service) kombiniert werden.

Die Erfindung wird nun anhand einiger Ausführungsbeispiele unter Bezugnahme auf die beiliegenden Zeichnungen näher erläutert. Es zeigen
- Figur 1: in schematischer Ansicht ein erstes Ausführungsbeispiel eines Verfahrens zum Herstellen einer lokalen Verbindung zwischen elektronischen Endgeräten; und
- Figur 2: in schematischer Ansicht ein zweites Ausführungsbeispiel eines erfindungsgemäßen Verfahrens zum Herstellen einer lokalen Verbindung zwischen elektronischen Endgeräten.

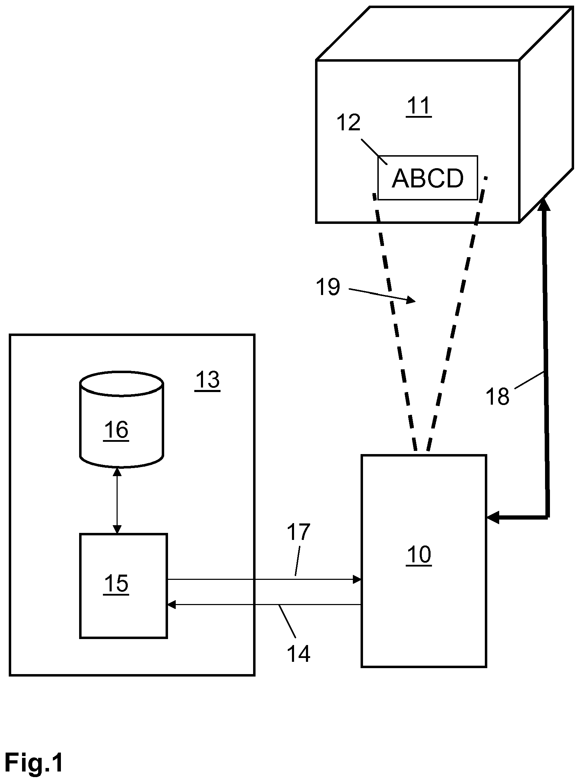

In der Figur 1 ist eine Situation dargestellt, die nicht Gegenstand der Patentansprüche ist, in der eine lokale Verbindung 18 zwischen einem ersten elektronischen Endgerät 10, beispielsweise einem Mobiltelefon, und einem zweiten elektronischen Endgerät 11, beispielsweise einem Projektor, etwa einem Beamer, hergestellt werden soll.

Moderne Mobiltelefone sind heutzutage im Hinblick auf Rechnerleistung und zur Verfügung stehenden Speicherplatz so gut und umfassend ausgestattet, dass sie ohne weiteres als eine Art mobiler Computer verwendet werden können. Aus diesem Grund ist es beispielsweise möglich, dass eine Präsentation, die ein Nutzer des Mobiltelefons 10 halten möchte, auf dem Mobiltelefon 10 abgelegt und über dieses abgerufen werden kann.

Moderne Konferenzsäle verfügen in der Regel über geeignete Präsentationsgeräte, wie beispielsweise Beamer oder dergleichen.

Wenn nun der Nutzer seine auf dem Mobiltelefon 10 befindliche Präsentation über das zweite, in Form eines Beamers ausgebildete elektronische Endgerät 11 einer Audienz präsentieren möchte, muss er zunächst eine lokale Verbindung 18 zwischen seinem Mobiltelefon 10 und dem Beamer 11 herstellen. Derartige Verbindungen sind heutzutage meist drahtlos, so dass der Nutzer zunächst entsprechende Konfigurationen und Einstellungen an seinem Mobiltelefon 10, und möglicherweise auch an dem Beamer 11, vornehmen muss. Um derartige Konfigurationen und Einstellungen in einer für den Nutzer einfachen und bedienfreundlichen Weise vorzunehmen, ist das erfindungsgemäße Verfahren vorgesehen.

Ausgangslage dabei ist, dass das Mobiltelefon 10 als erstes elektronisches Endgerät mit dem als zweites elektronisches Endgerät ausgebildeten Beamer 11 mittels einer lokalen Verbindung 18 gekoppelt werden soll. Bei dem Mobiltelefon handelt es sich im dargestellten Beispiel um ein solches, das mit einer Digitalkamera zum Erzeugen von Bilddateien ausgerüstet ist.

Um eine lokale Verbindung 18, die eine drahtlose Verbindung sein soll, herzustellen, erfasst der Nutzer mit seinem Mobiltelefon 10 zunächst Informationsdaten 12 des Beamers, welche den Beamer 11 charakterisieren können. Beispielsweise könnte es sich bei den Informationsdaten 12 um eine aufgedruckte Nummer, einen Barcode, einen individuellen Beamer-Namen, eine Produktbezeichnung, eine Abbildung des gesamten Beamers, oder dergleichen handeln. Im vorliegenden Beispiel sind die Informationsdaten 12 zum Zwecke der Verdeutlichung in Form einer Abfolge von vier Buchstaben "ABCD" dargestellt. Die Informationsdaten 12 werden von der im Mobiltelefon 10 befindlichen Kamera in Form von Bilddaten erfasst, was durch die Bezugsziffer 19 verdeutlicht ist. Dies geschieht in einer Weise, dass der Nutzer mittels der Digitalkamera in seinem Mobiltelefon 10 ein Foto von den Informationsdaten 12 macht.

Die Informationsdaten 12 werden anschließend auf eine externe Rechnereinheit 13, beispielsweise einen Server, übertragen, wobei der Übertragungsweg durch die Bezugsziffer 14 gekennzeichnet ist. Die Übertragung erfolgt dabei vorteilhaft über einen geeigneten Datenkanal. Das Foto kann beispielsweise in Form einer MMS an eine konkrete Telefonnummer oder einen konkreten Datenport gesendet werden, welche(r) der externen Rechnereinheit 13 zugeordnet ist.

Die Rechnereinheit 13 verfügt über eine Analyseeinrichtung 15, die in der Lage ist, die übertragenen Informationsdaten 12 auf deren Inhalt hin zu analysieren. Da die Informationsdaten 12 im dargestellten Beispiel in Form von Bilddaten übertragen werden, ist in der Analyseeinrichtung 15 vorteilhaft ein geeigneter Algorithmus zur Bilderkennung implementiert, mittels dessen das empfangene Bild analysiert und interpretiert werden kann. Auf diese Weise können die den Beamer 11 charakterisierenden Inhalte aus den übertragenen Informationsdaten 12 extrahiert werden.

Optional ist es auch möglich, dass das Mobiltelefon 10 zusätzlich zu den Informationsdaten 12 über den Beamer 11 auch Informationsdaten über sich selbst überträgt.

Auf der Basis der analysierten Inhalte werden von der Rechnereinheit 13 nun Daten zur Verbindungsherstellung zwischen dem Mobiltelefon 10 und dem Beamer 11 ermittelt. Dazu wirkt die Rechnereinheit 13 zumindest zeitweilig mit einer Datenbank 16, die im Beispiel Bestandteil der Rechnereinheit 13 ist, zusammen. In der Datenbank 16 sind zu unterschiedlichen zweiten elektronischen Endgeräten Informationsdaten abgelegt, die mit entsprechenden Daten zur Verbindungsherstellung mit anderen elektronischen Endgeräten verknüpft sind. Für das dargestellte Beispiel bedeutet dies, dass in der Datenbank den Beamer 11 betreffende Informationsdaten 12 abgelegt sind, die mit Daten zur Verbindungsherstellung mit anderen elektronischen Endgeräten, beispielsweise dem Mobiltelefon 10, verknüpft sind.

Nach der erfolgten Analyse der Informationsdaten 12 vergleicht die Rechnereinheit 13 die analysierten Inhalte mit solchen Informationsdaten, die in der Datenbank 16 abgelegt sind. Bei der Analyse können zusätzlich auch, sofern mit übertragen, die Informationsdaten bezüglich des Mobiltelefons 10 mitberücksichtigt werden. Dies ist insbesondere dann von Vorteil, wenn es sich bei dem Mobiltelefon 10 nicht um ein Standardgerät handelt und deshalb besondere Konfigurationen und Einstellungen erforderlich sind.

Sofern eine Übereinstimmung zwischen den analysierten Informationsdaten 12 und den in der Datenbank 16 befindlichen Informationsdaten vorliegt, werden die dazugehörigen und auf diese Weise ermittelten Daten zur Verbindungsherstellung von der Rechnereinheit 13 zur Herstellung der lokalen Verbindung 18 verwendet. Aufgrund der vom Mobiltelefon 10 empfangenen Informationsdaten 12 ist die Rechnereinheit 13 somit in der Lage, eine lokale Verbindung 18 zwischen dem Mobiltelefon 10 und dem Beamer 11 herzustellen, damit diese miteinander kommunizieren können.

Im dargestellten Beispiel gemäß Figur 1 werden die ermittelten Daten zur Verbindungsherstellung von der Rechnereinheit 13 an das Mobiltelefon 10 übertragen, was durch den mit Bezugsziffer 17 gekennzeichneten Übertragungsweg verdeutlicht ist. Die Rechnereinheit 13 kann beispielsweise eine geeignete Konfigurationsdatei an das Mobiltelefon schicken, damit eine lokale Schnittstelle, beispielsweise eine Bluetooth-Schnittstelle, eingerichtet und aktiviert werden kann, über die dann die Kommunikation zwischen Mobiltelefon 10 und Beamer 11 stattfindet.

Natürlich ist es auch denkbar, dass die Rechnereinheit 13 die Daten zur Verbindungsherstellung an den Beamer 11 schickt, und dass die Herstellung der Verbindung von Seiten des Beamers 11 aus initiiert wird. Sofern weder das Mobiltelefon 10 noch der Beamer 11 über eine entsprechend lokale Schnittstelle verfügen, könnte alternativ auch vorgesehen sein, dass die Verbindungsherstellung zwischen den beiden elektronischen Endgeräten über die Rechnereinheit 13 erfolgt und dass die Daten über die Rechnereinheit 13 geschleust werden. In diesem Fall stellt die Rechnereinheit 13 die entsprechende Schnittstelle dar.

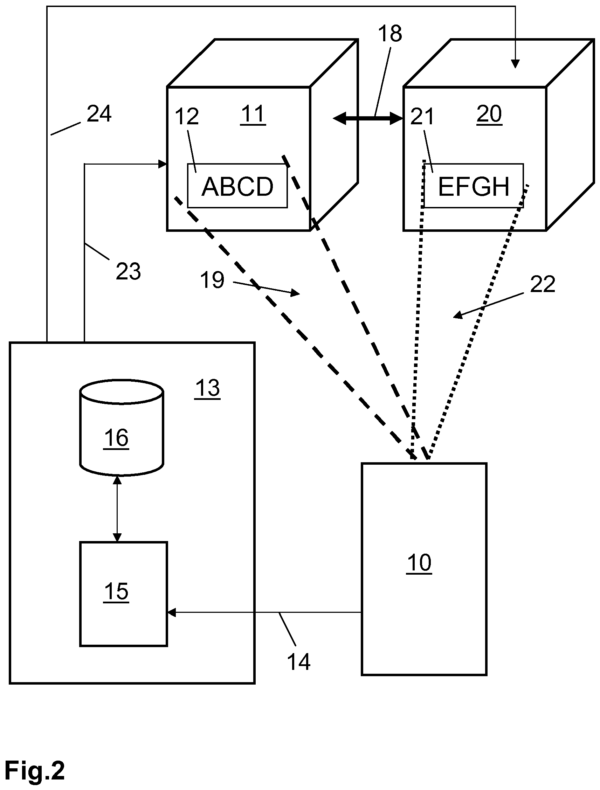

In dem in Figur 1 dargestellten Beispiel ist eine Situation beschrieben, in der ein als Mobiltelefon ausgebildetes erstes elektronisches Endgerät 10 mit einem zweiten elektronischen Endgerät 11 verbunden werden soll. Natürlich sind auch Anwendungsfälle denkbar, in denen zwei elektronische Endgeräte miteinander verbunden werden sollen, wobei das erste elektronische Endgerät 10 lediglich als eine Art Vermittler oder Verbindungsinitiator fungiert, ohne an der eigentlichen Verbindung später beteiligt zu sein. Ein solches erfindungsgemäßes Beispiel ist im Zusammenhang mit Figur 2 beschrieben.

Das in Figur 2 gezeigte Beispiel entspricht von seinem Grundaufbau und seiner Grundfunktionsweise zunächst dem in Figur 1 gezeigten Beispiel, so dass diesbezüglich zunächst auf die Ausführungen zu Figur 1 vollinhaltlich Bezug genommen und verwiesen wird. Weiterhin sind gleiche Bauelemente mit identischen Bezugsziffern versehen worden.

Bei dem in Figur 2 dargestellten Beispiel sollen ein zweites elektronisches Endgerät 11, beispielsweise wiederum ein Beamer, mit einem dritten elektronischen Endgerät 20, beispielsweise einem portablen Computer, über eine lokale Verbindung 18 miteinander verbunden werden. Dies geschieht unter Zuhilfenahme eines ersten elektronischen Endgeräts 10 in Form eines Mobiltelefons, welches mit einer Digitalkamera ausgestattet ist.

Über das erste elektronische Endgerät 10 (das Mobiltelefon) werden zunächst Informationsdaten 12, 21 bezüglich des zweiten elektronisches Endgeräts 11 und des dritten elektronischen Endgeräts 20, zwischen denen eine Verbindung 18 hergestellt werden soll, erfasst. Da das Mobiltelefon 10 über eine Kamera verfügt, können die Informationsdaten 12, 21 wiederum in Form von Bilddaten erfasst werden, was durch die Bezugsziffern 19 und 22 verdeutlicht ist. In dem in Figur 2 dargestellten Beispiel sollen die Informationsdaten 12 zum Beamer 11 wiederum in Form einer Buchstabenabfolge "ABCD" ausgebildet sein, während die Informationsdaten 21 zum portablen Computer 20 als Buchstabenfolge "EFGH" ausgebildet sind.

Die vom Mobiltelefon 10 erfassten Informationsdaten 12, 21 werden in einer wie im Zusammenhang mit Figur 1 beschriebenen Weise an die Rechnereinheit 13 übertragen, wobei der Übertragungsweg wiederum mit Bezugsziffer 14 gekennzeichnet ist.

In einer der Rechnereinheit 13 zugeordneten Analyseeinrichtung 15 werden die Informationsdaten 21, 21 auf Inhalte, die das wenigstens eine zweite elektronische Endgerät 11 und das wenigstens eine dritte elektronische Endgerät 20 charakterisieren, analysiert. Dies erfolgt im dargestellten Beispiel wiederum mittels eines geeigneten Algorithmus zur Bilderkennung.

Auf der Basis der analysierten Inhalte werden, wie auch im Zusammenhang mit Figur 1 beschrieben, in einer der Rechnereinheit 13 zugeordneten Datenbank 16 Daten zur Verbindungsherstellung zwischen dem wenigstens einen zweiten elektronischen Endgerät 11 und dem wenigstens einen dritten elektronischen Endgerät 20 ermittelt.

Auf der Basis der ermittelten Daten zur Verbindungsherstellung wird schließlich eine Verbindung 18 zwischen dem wenigstens einen zweiten elektronischen Endgerät 11 und dem wenigstens einen dritten elektronischen Endgerät 20 hergestellt. Dazu kann beispielsweise wiederum von der Rechnereinheit eine entsprechende Konfigurationsdatei an das zweite 11 und/oder dritte 20 elektronische Endgerät übertragen werden, was durch die mit den Bezugsziffern 23 und 24 versehenen Übertragungswege verdeutlicht ist. Mittels der übertragenen Konfigurationsdatei kann beispielsweise eine geeignete Schnittstelle zwischen den beiden elektronischen Endgeräten aktiviert werden, gegebenenfalls zunächst auch eingerichtet werden.

### Bezugszeichenliste

- 10: Erstes elektronisches Endgerät (mit integrierter Kamera)
- 11: Zweites elektronisches Endgerät
- 12: Informationsdaten
- 13: Externe Rechnereinheit
- 14: Übertragungsweg
- 15: Analyseeinrichtung
- 16: Datenbank
- 17: Übertragungsweg
- 18: Lokale Verbindung zwischen elektronischen Endgeräten
- 19: Erfasste Bilddaten
- 20: Drittes elektronisches Endgerät
- 21: Informationsdaten
- 22: Erfasste Bilddaten
- 23: Übertragungsweg
- 24: Übertragungsweg

### Bezugszeichenliste

- 10: Erstes elektronisches Endgerät (mit integrierter Kamera)
- 11: Zweites elektronisches Endgerät
- 12: Informationsdaten
- 13: Externe Rechnereinheit
- 14: Übertragungsweg
- 15: Analyseeinrichtung
- 16: Datenbank
- 17: Übertragungsweg
- 18: Lokale Verbindung zwischen elektronischen Endgeräten
- 19: Erfasste Bilddaten
- 20: Drittes elektronisches Endgerät
- 21: Informationsdaten
- 22: Erfasste Bilddaten
- 23: Übertragungsweg
- 24: Übertragungsweg

## Patentansprüche

1. Verfahren zum Herstellen einer lokalen Verbindung (18) zwischen elektronischen Endgeräten (11, 20), wobei sich die elektronischen Endgeräte (11, 20) in räumlicher Nähe zueinander befinden, **gekennzeichnet durch** folgende Schritte:
über ein erstes elektronisches Endgerät (10), welches mit einer Kamera ausgestattet ist, werden Informationsdaten (12, 21) bezüglich wenigstens eines zweiten elektronisches Endgeräts (11) und wenigstens eines dritten elektronischen Endgeräts (20), die in der Lage sind, das zweite elektronische Endgerät (11) und das dritte elektronische Endgerät (20) zu charakterisieren, zwischen denen eine Verbindung (18) hergestellt werden soll, erzeugt oder erfasst, indem die Informationsdaten (12) in Form von Bilddaten von der Kamera erfasst werden und an eine externe Rechnereinheit (13) übertragen (14);
in einer der Rechnereinheit (13) zugeordneten Analyseeinrichtung (15) werden die Informationsdaten (12, 21) mittels eines Bildanalyseverfahrens auf Inhalte, die das wenigstens eine zweite elektronische Endgerät (11) und das wenigstens eine dritte elektronische Endgerät (20) charakterisieren, analysiert;
auf der Basis der analysierten Inhalte werden in einer der Rechnereinheit (13) zugeordneten Datenbank (16), in der zu unterschiedlichen elektronischen Endgeräten Informationsdaten abgelegt sind, die mit entsprechenden Daten zur Verbindungsherstellung mit anderen elektronischen Endgeräten verknüpft sind, Daten zur Verbindungsherstellung zwischen dem wenigstens einen zweiten elektronischen Endgerät (11) und dem wenigstens einen dritten elektronischen Endgerät (20) ermittelt, wobei die Rechnereinheit (13) zumindest zeitweilig auf die Datenbank (16) zugreift;
nach der erfolgten Analyse der Informationsdaten (12) vergleicht die Rechnereinheit (13) die analysierten Inhalte mit solchen Informationsdaten, die in der Datenbank (16) abgelegt sind;
bei Übereinstimung zwischen den analysierten Informationsdaten (12) und den in der Datenbank (16) befindlichen Informationsdaten werden die dazugehörigen und auf diese Weise ermittelten Daten zur Verbindungsherstellung von der Rechnereinheit (13) zur Herstellung der lokalen Verbindung verwendet; und
auf der Basis der ermittelten Daten zur Verbindungsherstellung wird eine Verbindung (18) zwischen dem wenigstens einen zweiten elektronischen Endgerät (11) und dem wenigstens einen dritten elektronischen Endgerät (20) hergestellt.

2. Verfahren nach Anspruch 1, **dadurch gekennzeichnet, dass** die Verbindung zwischen dem wenigstens einen zweiten elektronischen Endgerät (11) und dem wenigstens einen dritten elektronischen Endgerät (20) über die externe Rechnereinheit (13) erfolgt.

3. Verfahren nach Anspruch 1, **dadurch gekennzeichnet, dass** die ermittelten Daten zur Verbindungsherstellung zum Zwecke der Verbindungsherstellung von der externen Rechnereinheit (13) auf das erste elektronische Endgerät (10) und/oder das wenigstens eine zweite elektronische Endgerät (11) und/oder das wenigstens eine dritte elektronische Endgerät (20) übertragen (23, 24) werden.

## Claims

1. Method for establishing a local connection (18) between electronic terminals (11, 20), whereby the electronic terminals (11; 20) are located in spatial proximity to each other, **characterized by** the following steps:
via a first electronic terminal (10), which is equipped with a camera, information data (12, 21) relating to at least one second electronic terminal (11) and to at least one third electronic terminal (20), which are provided to characterize the second electronic terminal (11) and the third electronic terminal (20), between which a connection (18) shall be established, are generated or captured, whereby the information data (12) are captured by the camera in the form of image data and are transmitted (14) to an external computer unit (13);
in an analysis device (15) assigned to the computer unit (13), the information data (21, 21) are analysed, by means of an image-analysis-method,
for contents that characterize the at least one second electronic terminal (11) and the at least one third electronic terminal (20);
on the basis of the analysed contents, data for establishing a connection between the at least one second electronic terminal (11) and the at least one third electronic terminal (20) are determined in a database (16) associated with the computer unit (13), in which information data to different electronic terminals are stored, which are linked to respective data for establishing a connection to other electronic devices, whereby the computer unit (13) at least temporarily accesses said database (16);
after the analysis of the information data (12), the computer unit (13) compares the analysed contents with such information data, which are stored in said database (16); if there is a consistence between the analysed information data (12) and the information data in said database (18), the assigned and in this way determined data for the establishment of the connection are used by said computer unit (13) for establishing the local connection; and
on the basis of the determined connection establishment data, a connection (18) is established between the at least one second electronic terminal (11) and the at least one third electronic terminal (20).

2. Method according to claim 1, **characterized in that** the connection between the at least one second electronic terminal (11) and the at least one third electronic terminal (20) is established via the external computer unit (13).

3. Method according to claim 1, **characterized in that** the determined data for establishing a connection, are transmitted (23, 24), for the purpose of establishing the connection, from the external computer unit (13) to the first electronic terminal (10) and/or to the at least one second electronic terminal (11) and/or to the at least one third electronic terminal (20).

## Revendications

1. Procédé de fabrication d'une liaison locale (18) entre des terminaux électroniques (11, 20), dans lequel les terminaux électroniques (11, 20) se trouvent à proximité les uns des autres, **caractérisé par** les étapes suivantes :
par le biais d'un premier terminal électronique (10), qui est équipé d'une caméra, sont générées ou saisies des données d'information (12, 21), concernant au moins un deuxième terminal électronique (11) et au moins un troisième terminal électronique (20), qui sont en mesure de caractériser le deuxième terminal électronique (11) et le troisième terminal électronique (20), entre lesquels une liaison (18) doit être fabriquée, en ce que les données d'information (12) sont saisies par la caméra sous forme de données d'image et transmises (14) à une unité de calcul (13) externe ;
dans un dispositif d'analyse (15) associé à l'unité de calcul (13), les données d'information (12, 21) sont analysées au moyen d'un procédé d'analyse d'image quant à des contenus qui caractérisent l'au moins un deuxième terminal électronique (11) et l'au moins un troisième terminal électronique (20) ;
sur la base des contenus analysés, dans une banque de données (16) associée à l'unité de calcul (13), dans laquelle sont déposées des données d'information relatives à différents terminaux électroniques, qui sont reliées à des données correspondantes pour la fabrication d'une liaison avec d'autres terminaux électroniques, sont déterminées des données pour la fabrication d'une liaison entre l'au moins un deuxième terminal électronique (11) et l'au moins un troisième terminal électronique (20), dans lequel l'unité de calcul (13) accède au moins temporairement à la banque de données (16) ;
après l'analyse réussie des données d'information (12), l'unité de calcul (13) compare les contenus analysés à des données d'information qui sont déposées dans la banque de données (16) ;
en cas de concordance entre les données d'information (12) analysées et les données d'information se trouvant dans la banque de données (16), les données, associées à celles-ci et déterminées de cette façon, pour la fabrication d'une liaison sont employées par l'unité de calcul (13) pour la fabrication de la liaison locale ; et
sur la base des données déterminées pour la fabrication d'une liaison est fabriquée une liaison (18) entre l'au moins un deuxième terminal électronique (11) et l'au moins un troisième terminal électronique (20).

2. Procédé selon la revendication 1, **caractérisé en ce que** la liaison entre l'au moins un deuxième terminal électronique (11) et l'au moins un troisième terminal électronique (20) est effectuée par le biais de l'unité de calcul (13) externe.

3. Procédé selon la revendication 1, **caractérisé en ce que** les données déterminées pour la fabrication d'une liaison sont transmises (23, 24) aux fins de la fabrication d'une liaison par l'unité de calcul (13) externe au premier terminal électronique (10) et/ou à l'au moins un deuxième terminal électronique (11) et/ou à l'au moins un troisième terminal électronique (20).
